(19) Europäisches Patentamt / European Patent Office / Office européen des brevets

(11) **EP 2 891 793 A1**

(12) **EUROPEAN PATENT APPLICATION**

(43) Date of publication:
08.07.2015 Bulletin 2015/28

(51) Int Cl.:
*F03D 9/00* (2006.01)    *F03D 9/02* (2006.01)
*F15B 21/14* (2006.01)    *H02J 15/00* (2006.01)

(21) Application number: 14386035.1

(22) Date of filing: 29.12.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 02.01.2014 GR 20140100005
22.12.2014 GR 20140100653

(71) Applicant: Pittas, Nicholas
26500 Rion Patras (GR)

(72) Inventor: Pittas, Nicholas
26500 Rion Patras (GR)

(54) **Automatic system of wind and photovoltaic energy storage for uninterruptible electric energy output providing energy autonomy**

(57)    Automatic system of wind and photovoltaic energy storage for uninterruptible electric energy output, providing energy autonomy, is defined by the fact that it consists of wind turbines (K1) and photovoltaic modules (K2) independently or in combination, that mechanically or electrically connected drive appropriate air compressors (1), (2), which compress air to high pressure and after dehumidifying it with adsorption type filters of almost complete dehydration (T1), (T2) they deliver the compressed air for storage in suitable airtight storage tanks/pressure vessels, from where it exits and after possibly passing once again through a dehumidification filter (T3) of the same type, through the appropriate pressure reducers (T$_4$) and various other devices such as the heat exchanger (T5) or alternatively a heating element, compressed air can optionally absorb the heat that is withdrawn from the air compressors, but primarily and continuously from the heat pump (T$_7$), which is fed by the generated energy, in order to increase its volume and is expanded in an appropriate air engine (5) equipped in such a way that the energy output matches demand, the shaft of which is connected to the shaft of an electric generator (6) at the terminals of which there is output of electric energy and cold air suitable for district cooling (7).

Figure 1A

**Description**

In my statement, patent No 1008370, an innovative system for storage and supply of continuous electric energy is described, using as sources wind and solar photovoltaic energy, either combined or independently. The combination choice depends upon the availability of wind and photovoltaic, on-site, potential.

By this amendment they are absolutely clarified the following issues:

A) The type of the air dryer.
B) The technical specifications the storage tanks must meet, as sizes etc.
C) The necessary accomplishment of the layout with an additional part, a heat pump or a heating element, for the undisturbed operation of the device.
D) The pressure field the reducer operates in

The previous layout consisted of one or more Wind Turbines (W/T) and Photovoltaic arrangements (P/V), one or more air compressors connected in parallel, one or more storage tanks connected in series and one or more turbines joined to the corresponding electric generators in parallel, for the electrical energy production.

The operation of this device is described below.

From the rotational energy of the W/T shaft through a Cardan join, or by the produced electric energy from the W/T, the air compressor starts working and compresses atmospheric air to approximately 180-220 bar, channeling it to the airtight storage tank, from which controlled compressed air is driven to expand into a turbine, the shaft of which is connected to an electric generator.

The value of 180-220 bar is not the maximum operating limit of the system, but only a cost effective and technologically possible approach, adjusted over time according to the development of the materials science (e.g. Graphene), enabling the construction of lower cost, larger volume and higher pressure storage tanks, a fact that will increase the energy density of the compressed air and thus the electric energy autonomy. Specifically, storage tanks with an approximate volume of 100 $m^3$ each, can be constructed (in cylindrical shape of 2m diameter, 37m in length and 88-90mm of thickness) by steel, in order to withstand an operating pressure of 190 bar, deploying an energy storage capacity of about 1.4 MWh.

Smaller volume storage tanks can also be constructed, depending on the demand, with reduced thickness according the Strength of Materials science. These storage tanks will be connected in series, as communicating tanks, for increasing the available volume and consequently their energy storage capacity.

The choice of high air pressure is the critical parameter in order to achieve high energy density, needed to accomplish energy autonomy. Such storage tanks may have been constructed for various uses, but never with the technical specifications mentioned above, nor as communicating vessels, for storing and producing electric energy.

The mechanical join is the first way of energy transfer. The second way for energy production and storing is shown in figure (1A), where a part of the produced electricity feeds the compressor, that compresses air to the desired level and delivers it in the airtight compressed air storage tank. In the case of only P/V or combined W/T and P/V, the usage of the electric interconnection is the only way of energy transfer.

The operation of the device is described below, followed by the description of implementation.

We activate the mechanical join of the blades shaft (K1), as depicted in fig. (1A), with the rotor shaft of the air compressor and turn on the air compressor (2) either with the produced electricity by the W/T or by P/V or both sources, combined as shown in figure (1A). The air compressor (2) compresses air to the desired level and delivers it to airtight compressed air storage tank (4).

The compressed air is led, after passing through the dryers (T1) and (T2) equipped with adsorption filters through which the compressed air alternately enters and after being dehumidified in such a way so that the dew point ranges between -40°C and -70°C (the air to be totally dry) before entering the storage tank(s) (functioning as communicating vessels) that are appropriately configured and dimensioned, so that the energy of the stored compressed air to greatly exceed the energy requirements during the statistically longest duration of wind calm or insufficient sunshine, based on the local wind and sunshine data. In the production phase, after the air been passed (possibly) through an adsorption filter dryer of the same type with the same technical specifications as the mentioned dryers (T1) and (T2), it passes next through a pressure reducer (T3) or more pressure reducers, in order to decrease its pressure, for instance from 200bar to a much lower pressure, for instance under 100 bar, as the manufacturing of turbines and relevant thermoaerohydraulic devices, in order to withstand such high pressures as 100 bar requires extreme thickness in every component that composes a turbine and the heat exchangers, with prohibitive costs and gigantic machines. Next, the air passes into the heat exchanger (T4) for been heated by a heat pump (T5) or alternatively a heating element, which in turn gets its energy supply from the produced energy, ensuring the smooth/uninterrupted operation of the system. After this stage it enters the cryogenic turbine (5) where it expands causing the rotation of the electric generator (synchronous or asynchronous) (6).

Reducers of this type already exist and are used for several purposes but never for storage-generation of energy.

Another point to be mentioned is that more than one pressure reducers are necessary to be installed for a pressure decrease, for example from 200bar to 4bar. Because a rapid decrease/drop of pressure with such a big pressure difference causes simultaneously a violent decrease of temperature and ice formation.

Therefore, there will be a pressure decrease in the first reducer for instance from 200bar to 100bar, in the second reducer from 100bar to 30bar and in the third reducer from 30 bar to 4 bar, if we have chosen a 4 bar compressed air input in the generator's turbine.

A small percentage of the produced electric energy, e.g. 10-15%, that does not affect the total energy output will heat up a heating element or drive a heat pump (T7). The compressed air will pass through the heat exchanger (T4) and be heated.

This way the compressed air temperature increases and therefore leads to an increase of its expanded volume, which results to a corresponding increase in energy autonomy.

An undisturbed and reliable system operation is enabled in this fashion, as it removes the possibility of ice forming on the turbine blades, or inside the compressed air inlet pipe, that could cause blocking and system operation failure.

It should be noted that, for the heating of the compressed air from the electric energy output at the generator terminals, it takes about 1-2 minutes after its start up. This time is minimal, thus the temperature of the inlet pipe leading to the engine and of the engine itself is not rapidly decreased, because of thermal inertia, so that there is time for the heat to be transferred to the incoming compressed air and to avoid the formation of ice that could result in destroying the engine and making the operation of the device impossible.

Heat pumps as well as heating elements of this type already exist and are used for various purposes, but never for the specific one in the energy storage and production layout.

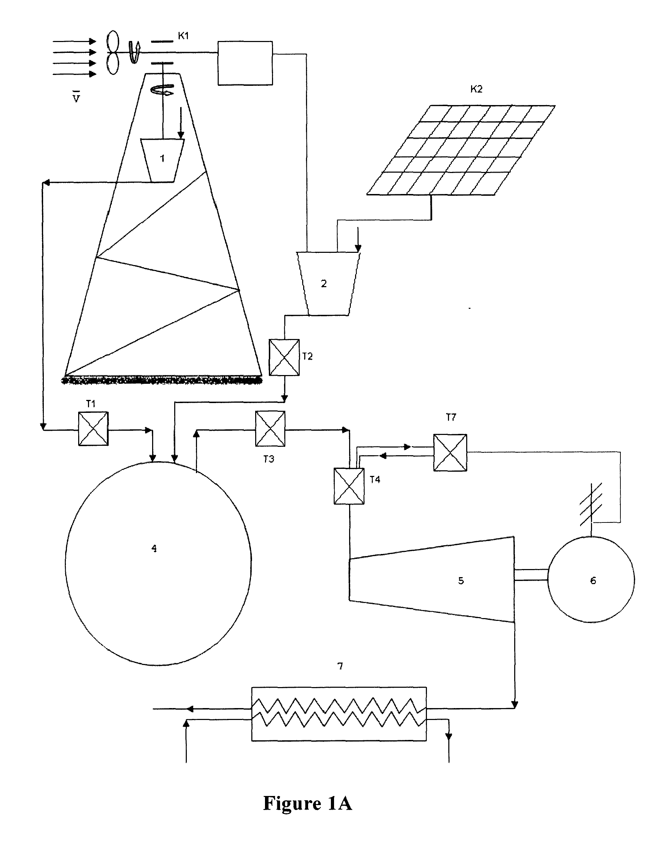

Figure 1 shows the basic structure of of the device, for the conversion of wind energy or photovoltaic energy or both of them combined into electric energy with the capability of uninterruptible output, providing thus energy autonomy.

As a result, when there is wind calm or insufficient sunshine, air coming from the compressed air storage tank (4) enters a cryogenic turbine (5), where it expands, causing the shaft of the turbine to spin, which in turn causes the electric machine shaft (synchronous or asynchronous) that it is connected to, to spin, generating electric energy. The expanding air, exiting the cryogenic turbine e.g. at a temperature of 2°C and proper pressure, can be used for district cooling applications (7). The temperature of the exhaust air depends on the pressure that we will choose for the expansion.

This process of storing compressed air can be done whenever desired, with electric energy being generated at the same time by the electric generator (synchronous, asynchronous, other), which is connected to the rotating shaft of the wind turbine or the respective/equivalent photovoltaic plant.

For the full automation and operation of the system, it is equipped with filters, gears, couplings, reducers, sensors, thermometers pressure switches, PLC, inverters etc., all of which are connected to the control panel of the device.

With this layout and these Renewable Energy Sources, based on wind speed or sufficient sunshine, uninterruptible energy output is provided, as well as total reliability is achieved, since this layout can smoothen the balancing load, with any possible operational and financial advantage this can have for a potential connection to the electrical grid, resulting from the stochastic nature of RES.

By the use of wind energy directly, we can avoid the capital cost of the components as well as of the electric conversion connected to the intermediate generated electrical output and thereby achieve a conversion factor of wind energy to mechanical energy, supplied to the air compressor of about 67%.

In contrast, a conversion with intermediate electrical output has a factor of about 22%.

The choice of one way or the other, at least for the WTs is a compromise between technical feasibility, economic cost and installation facilities for a W/T or a P/V plant, in a given area.

The resulting theoretical and technological problems for the implementation and use of the described device, for both RES, are the following:

> During atmospheric air compression, condensation occurs and water accumulates in the storage tank, because of the micro expansions of compressed air when entering a larger space (storage tank). During the pass next to the pressure regulator, where a violent pressure drop of the compressed air takes place combined with the respective instant violent decrease of the temperature and this results in the formation of ice that causes the deterioration of mechanical properties and durability and blocks the pipes of compressed air flows, as well as every metallic or non-metallic component which is in contact with them, with every impact this might have eventually, causing the non-functioning of the device.

To solve this problem, we have to install adsorption filter dryers at a high pressure of 100bar and more, after the compressors and possibly after the exit of the storage tank, so that the dew point to be significantly below zero, approximately at -40 έως -70 °C.

Adsorption type dryers with these technical specifications already exist for other uses and purposes, but they have never been used for such one use.

This will result in the total dehumidification of the compressed air and complete drying, so that expansion can occur without the problems mentioned above, i.e. ice formation and blockage.

In addition, with the supply of heat to the compressed air, before it enters the air engine, will increase its enthalpy causing an equivalent energy increase and smooth operation of the device.

Other heat sources can contribute to the heat exchanger (T4), that have previously been led to thermal energy storage, such as solar, photovoltaic or waste heat etc. However all of them are defined by the output uncertainty, since their productive time does not coincide with the thermal energy demand time.

By this innovative addition of heat pumps or heating elements, that dissipate energy from the generated output to heat the compressed air, before entering the air engine for expansion, the storage device becomes energy self-sufficient.

The second malfunction problem arises from the combination of the non-sophisticated construction, combined with the very low efficiency of the air engines, at least in terms of power, that leads to high consumption of compressed air, which in turn reduces the energy autonomy and requires a large number of storage tanks, a fact that involves multiple costs and makes the device unprofitable.

The prospect of enlarging the storage tank or the storage tanks, functioning at very high pressures, encounters problems such as constructive limitations-composite materials at prohibitive costs.

To solve this problem, the solution of a novel rotating piston air engine will be adopted that will have 5 times the performance of a fin equipped motor, while on the same time the waste heat from the air compressor will be collected and transferred to the heat exchanger (T4), after the engine head resulting in a volume dilation of the compressed air to be expanded This way, we can achieve an increase in gas volume for expansion and in the energy produced as well, when the air compressors are operating or when there is a contribution of waste heat from other sources.

A well known fact is that by compression air it is heated and the heat must be dissipated to the environment so that the temperature remains constant. In order to cool a compressor, an internal compact air to air heat exchanger has to be used, for optimizing the heat transfer, or a liquid to air heat exchanger to dissipate the waste heat, produced from the compressors (water cooled), using it for the heating of the incoming compressed air at the gas turbine head, to increase the enthalpy.

For ideal gases in an isothermal process:

$$PV = nRT = const$$

$$W_{ab} = \int_a^b P \cdot dV = \int_a^b n \cdot R \cdot T \frac{dV}{V} = n \cdot R \cdot T \int_a^b \frac{dV}{V} = n \cdot R \cdot T \cdot \left( \ln V_b - \ln V_a \right) =$$

$$= n \cdot R \cdot T \cdot \ln\left(\frac{V_b}{V_a}\right) = n \cdot R \cdot T \cdot \ln\left(\frac{P_a}{P_b}\right) = P \cdot V \cdot \ln\left(\frac{P_a}{P_b}\right)$$

Where P is the absolute pressure, V is the volume of the tank, R is the universal gas constant, T is the absolute temperature and W is the stored energy.

So we have approximately:

$$2.27 \ln\left(\frac{P_a}{P_b}\right) kJ$$

at 0°C or 273,15K or

$$2.478 \ln\left(\frac{P_a}{P_b}\right) kJ$$

at 25°C or 298K per mole or

$$100 \ln\left(\frac{P_a}{P_b}\right) kJ/m^3$$

A unit with a very large compressed air storage capacity, compared to another unit with a limited storage capacity, will generate more electric energy. Large scale energy storage, in form of compressed air, can generate electric energy for a long time without any wind or sufficient sunshine achieving thus a matching of the energy demand curve to that of the energy supply.

The capability to operate a W/T with a simultaneous presence of a P/V plant increases energy autonomy.

As the power of the produced energy depends on supply, since P(Kw)=M($\Delta$H)s/860X $\eta$t=M($\Delta$H)s/1000 where $\eta$t=0.9 and M is the mass flow rate of the compressed air and $\Delta$H is the enthalpy level, for example for input conditions P1=100bar, T1=100°C to P2=20 bar, T2=-20°C output conditions, it results that we can produce the desired electric power with an enthalpy level of 170 kJ/kg approximately, 763 kW are generated (within our storage limits) depending on our needs, by regulating the air supply of the compressed air at the gas turbine head intake.

Technically this can be achieved with a speed controller for the rotating shaft, controlling a valve on the gas turbine head, in order to almost always have a frequency of 50Hz, dictated by the network needs Thus, when load demand decreases, the speed controller commands the valve to limit the mass of compressed air entering the gas turbine, and in the same manner when the demand increases the valve allows a mass increase that leads to a power increase.

As an effect the energy autonomy increases, resulting from the fact that the layout does not waste any more energy, than the exact amount the user needs.

The conversion time of the energy in form of compressed air and supply to the electrical grid, in this layout, is about 10-15sec, compared to about 1 hour for hydroelectric units, 10 hours for gas thermoelectric plants, about 2 days for coal thermal power stations and one week for nuclear power plants.

The replenishment rate of the storage capacity of the air reservoir (total number of airtight storage tanks) depends on the available wind-solar energy and consequently on the number and efficiency of the wind-photovoltaic devices to collect it. The more they collect energy, the faster the air reservoir is replenished.

To achieve energy autonomy for a given amount of time, there must be a constant power output over time on the grid, i.e. the compressed air supply and the import conditions, to be steady over time and this can be done by constructing and filling more storage tanks working at a pressure of 180 bar and more, so that the time of constant power output can be extended, according to the needs of the electrical grid.

A usage scenario of this directed wind-photovoltaic energy layout is to diminish the unpredictable nature of a wind-photovoltaic park, when the wind turbines stop or when there is insufficient sunshine.

This layout generates power with reliability, significantly more than that generated from the equivalent conventional wind or photovoltaic plants. That is, a conventional wind-photovoltaic plant with a capacity of 100MW can only generate 30-40% of that, whereas the suggested layout will generate 90-100MW.

In practice, the unit will store energy when load demand is low and will generate power when needed.

AN EXAMPLE OF ENERGY AUTONOMY, USING WIND AND PHOTOVOLTAIC ENERGY.

Let's a total power of 15kW is available, generated by a photovoltaic module, or by a small W/T, or both combined.

This energy drives two air compressors with power output of 2x5.5kW=11kW that compress to 180 bar and take in 250lt/min=250x lt/1/60h=15000lt/h=15m³/h 2x15m³/h=30m³/h.

As 1000/180=5,5 lt/m³ it means that 30m³/hX5.5lt/m³ =165 lt/h of air will enter the storage tank of 1760lt volume ,thus the filling of the storage tank will be completed in 1760/165 or in approximately 10.6 hours.

To achieve this compression, energy equal to 11X10.6=115 kWh was spent.

About 70% of this energy would have been permanently lost, without the system described above with an energy recovery rate of 30%. Consequently, stored energy in form of compressed air approximates to 35kWh.

The 1760lt storage tank contains 1760lt/5.5lt/m³=320m³.

The special air engine consumes 84m³/h to produce 12kW of power with an autonomy of 320/84=3.8 hours.

An equivalent conventional air engine generating the same power consumes 300m³/h with an autonomy of only 320/450=0.71 X 60= 42.6 minutes.

By dissipating from the generated energy to drive a 1.7kWh heat pump we heat the compressed air after the reducer from 7° C to 45 °C resulting in a volume increase of about 20%.

Adding a percentage of 20% in the volume increase of the compressed air from the energy recovery we get 20X 320=96 96+320=416m³.

This gives 416/84=4.95 hours of autonomy.

To further increase the autonomy (for a power supply of 10kW) using a 2m height and 1.5m diameter cylindrical storage tank/pressure vessel with hemispherical ends we get a total volume of 1.76 m³ +3.53m³=5.29m³, therefore

$5290/4.5=1175m^3/84=14$ hours of energy autonomy, making a $120m^2$ household energy self-sufficient Fitting the tank by three 5.5kW compressors to 220bar will be $3X30=90m^3/h$ as $90m^3/hX 4.5lt/m^3=405$ lt/h ,it takes $5290/405=13$ to fill the storage tank/vessel and a 18kW power source.

Energy autonomy in hours will be much greater because of the speed controller which limits the consumption of compressed air to the precise energy need, by saving more of the air volume for expansion.

**Claims**

1. Automatic system of wind and photovoltaic energy storage for uninterruptible electric energy output providing energy autonomy. It consists of wind turbines (K1) and photovoltaic modules (K2) independently or in combination, that mechanically or electrically connected drive appropriate air compressors (1), (2), which compress air to high pressure and after dehumidifying it with adsorption type filters of almost complete dehydration (T1), (T2) they deliver the compressed air for storage in suitable airtight storage tanks/pressure vessels that also function as communicating vessels, **characterized by** the fact that these dryers (T1), (T2) are equipped with total dehumidification filters at pressures over 100 bar and have a dew point of -40° to - 70° degrees Celsius. These tanks/pressure vessels are cylindrical about 100 $m^3$ in volume each and can be constructed by steel 2m diameter, 37m length and 88-90mm thickness, in order to withstand operational pressure about 190 bar, and provide energy storage capacity of about 1,4MWh. Different steel thicknesses may be used, depending on the storage volume required, in a given high pressure over 130bar.

   These pressure vessels/tanks* will be connected in series, to maximize the available volume, depending on the requirements and consequently the energy storage capacity, and installed/constructed underground to ensure safety. These pressure vessels/tanks are equipped with a safety valve, a drain valve to remove any possible moisture caused by the micro expansions of the compressed air entering a larger space, and the bigger ones with a manhole for inspection.

   They are also equipped with/ pressure gauges, temperature gauges, hygrometer and data transmitters.

2. Automatic system of wind and photovoltaic energy storage for uninterruptible electric energy output providing energy autonomy, according to claim (1) defined by the fact that compressed air exiting the storage tanks/pressure vessels at over 100bar, possibly passing through a total dehumidification absorption type dryer, in order to ensure lack of moisture, to avoid the minimum possibility of ice formation with a dew point of -40° to - 70° degrees Celsius, for pressures over 100bar, is guided to pass through the in series connected pressure reducer or reducers (T3).

3. Automatic system of wind and photovoltaic energy storage for uninterruptible electric energy output, providing energy autonomy, according to claims (1) and (2) is defined by the fact that compressed air entering the in series connected pressure reducer or pressure reducers ($T_3$) is subject to pressure drop to adapt to the air engine intake demands, for instance from 130-200bar, to a much lower pressure, for instance under 100bar, because the manufacturing of turbines and relevant thermoaerohydraulic devices, to withstand such high pressures as 100bar and over require extreme thickness, fabrication complexity in every component that composes a turbine and a heat exchanger with prohibitive costs and gigantic machines.

   With the passage of the compressed air through the pressure reducer (T3) with the same speed, a simultaneous steep temperature drop occurs with a potential formation of ice and to avoid this possibility compressed air will pass through the heat exchanger (T4).

4. Automatic system of wind and photovoltaic energy storage for uninterruptible electric energy output, providing energy autonomy, according to claims (1), (2),(3) is defined by the fact that compressed air passing through graduated pressure reducers, which are connected in series, to minimize the ice formation phenomenon that is accompanied by temperatures way below zero.

   It should also be noted it is necessary to install more than one pressure reducer, e.g. to achieve a pressure drop from 200 bar to 4 bar with limited problems. That is because a vertical pressure drop with so much difference in pressure causes the violent and simultaneous drop of temperature with ice formation.

   Therefore there will be a pressure decrease in the first reducer for instance from 200bar to 100bar, in the second reducer from 100bar to 30 bar and in the third reducer from 30 bar to 4 bar, if we have chosen a 4 bar compressed air input in the motor.

   Of course this phenomenon will still exist however to a lesser extent and this will reduce the heat supply requirement coming from the generated electric energy. Thus, the efficiency of the layout will be increased.

5. Automatic system of wind and photovoltaic energy storage for uninterruptible electric energy output providing energy autonomy, according to claims (1), (2),(3) and (4) is defined by the fact that compressed air flows through the heat exchanger (T4) for heat supply to the passing compressed air, heat generated by the heat pump ($T_7$) or alternatively by a heating element.

6. Automatic system of wind and photovoltaic energy storage for uninterruptible electric energy output providing energy autonomy, according to claims (1), (2),(3),(4) and (5), is defined by the fact that the heat provided to the heat exchanger (T7), which dissipates a small percentage of 10-15% of the generated electric energy, or energy generated either by a heating element or by a contribution of the waste heat from the air compressors or waste heat from other sources.

The thermal load provided to the compressed air will raise its temperature and increase its volume according to the gas law and avert the risk of ice formation.

It should be noted that for the heating of the incoming compressed air by the electric energy output generated, it takes about 1-2 minutes after starting the engine.

This time is minimal, thus the temperature of the inlet pipe leading to the engine and of the engine itself is not rapidly decreased because of their thermal inertia, so that there is time for the heat to be transferred to the incoming compressed air and to avoid the formation of ice, that could result in destroying the engine and making the operation of the device impossible.

7. Automatic system of wind and photovoltaic energy storage for uninterruptible electric energy output providing energy autonomy, according to claims (1), (2),(3),(4) and (5),(6) is defined by the fact that the compressed air coming exiting the heat exchanger (T4) has an increased temperature because of the heat provided to it by a heat pump or a heating element and enters an appropriate air engine (5) equipped with a speed controller that controls a valve on the head of the turbine to regulate the desired output, so that the demand curve matches the supply curve, is subject to expansion and causes the electric generator (6) that is connected to spin, generating electric energy at the terminals of the electric generator (6).

8. Automatic system of wind and photovoltaic energy storage for uninterruptible electric energy output providing energy autonomy, according to claims (1), (2),(3),(4),(5) and (6),(7) is defined by the fact that only a small percentage of about 10-15% of the generated electric energy is dissipated to drive the heat pump (T7) or the heating element and heat the compressed air coming into the air engine.

9. Automatic system of wind and photovoltaic energy storage for uninterruptible electric energy output providing energy autonomy, according to claims (1), (2),(3),(4),(5),(6),(7),(8), is defined by the fact that because of the expansion, the exiting compressed air is cold and can be used for district cooling (7).

10. Automatic system of wind and photovoltaic energy storage for uninterruptible electric energy output providing energy autonomy, according to claims (1), (2),(3),(4),(5),(6),(7),(8), is defined by the fact that this layout is used for storing and generating energy and providing energy autonomy.

**Figure 1A**

Europäisches
Patentamt

European
Patent Office

Office européen
des brevets

# EUROPEAN SEARCH REPORT

Application Number

EP 14 38 6035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 677 169 A1 (BEIJING XIANGTIAN HUACHUANG AERODYNAMIC FORCE TECHNOLOGY RES INST COMP) 25 December 2013 (2013-12-25) * paragraphs [0005] - [0026], [0079] - [0080], [0099] - [0110]; claim 21; figures 1, 8, 9 * | 1-10 | INV. F03D9/00 F03D9/02 F15B21/14 H02J15/00 |
| Y | US 4 849 648 A (LONGARDNER ROBERT L [US]) 18 July 1989 (1989-07-18) * the whole document * | 1-10 | |
| A | WO 2010/125568 A2 (TECHNION RES & DEV FOUNDATION [IL]; AMIRAM ADMON [IL]; ABRAMOVICH HAIM) 4 November 2010 (2010-11-04) * the whole document * | 1-10 | |
| A | WO 2009/144737 A1 (PATEL MADHUSUDAN PURSHOTTAM [IN]; MCKINNEY HINA [US]) 3 December 2009 (2009-12-03) * the whole document * | 1-10 | |

|  |
|---|
| TECHNICAL FIELDS SEARCHED (IPC) |
| F03D F15B H02J |

The present search report has been drawn up for all claims

| Place of search | Date of completion of the search | Examiner |
|---|---|---|
| The Hague | 19 May 2015 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 14 38 6035

This annex lists the patent family members relating to the patent documents cited in  the above-mentioned European search report.
The members are as contained in the European Patent Office EDP file on
The European Patent Office is in no way liable for these particulars which are merely given for the purpose of information.

19-05-2015

| Patent document cited in search report | | Publication date | Patent family member(s) | | Publication date |
|---|---|---|---|---|---|
| EP 2677169 | A1 | 25-12-2013 | AU | 2012227228 A1 | 28-03-2013 |
| | | | CN | 102996359 A | 27-03-2013 |
| | | | EP | 2677169 A1 | 25-12-2013 |
| | | | JP | 2014505195 A | 27-02-2014 |
| | | | KR | 20140059156 A | 15-05-2014 |
| | | | US | 2014196456 A1 | 17-07-2014 |
| | | | WO | 2013037202 A1 | 21-03-2013 |
| US 4849648 | A | 18-07-1989 | NONE | | |
| WO 2010125568 | A2 | 04-11-2010 | NONE | | |
| WO 2009144737 | A1 | 03-12-2009 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1008370 A